# EUROPEAN PATENT SPECIFICATION

(11) **EP 0 880 864 B1**
(45) Date of publication and mention of the grant of the patent: **24.11.2004**
(21) Application number: 97904691.9
(22) Date of filing: 23.01.1997
(51) Int. Cl.: H04Q 7/24

(54) **A WIRELESS ATM SWITCHED LOCAL AREA NETWORK SUPPORTING MOBILITY OF MOBILE TERMINALS**
SCHNURLOSES ATM-VERMITTELTES LOKALES NETZWERK MIT MOBILITÄTSVERWALTUNG VON MOBILEN ENDGERÄTEN
RESEAU LOCAL COMMUTE A MODE DE TRANSFERT ASYNCHRONE FACILITANT LA MOBILITE DES TERMINAUX MOBILES

(30) Priority: 12.02.1996 SE 9600503
(43) Date of publication of application: 02.12.1998
(73) Proprietor: TELIA AB, 123 86 Farsta (SE)
(72) Inventor: KAVAK, Nail, S-143 32 Varby (SE)
(74) Representative: Akerman, Marten Lennart
(86) International application number: PCT/SE1997/000108
(87) International publication number: WO 1997/029605

(56) References cited:
- US-A- 5 487 065
- BUSINESS COMMUNICATIONS REVIEW, Volume 23, December 1993, DAVID H. AXNER, "Differing Approaches to Virtual LANs", page 42-45.

## Description

The present invention relates to a wireless ATM based virtual local area network (LAN) and, more particularly, such a LAN arranged to support seamless handoff between base stations and providing the ability to migrate transmission paths following handoff.

The rapid proliferation of portable commuters, the availability of deregulated radio bandwidth and the prospect of reduced costs for office rearrangement has led to the emergence of wireless LANs as an interconnect technology. Wireless LANs enable the realisation of "computing anywhere at any time". Mobility and portability can be expected to create entire new classes of subscriber applications.

First generation wireless LANs are, in reality, mere extensions of traditional LANs, i.e. the extension of existing LANs by, e.g. radio, or infra-red, and are employed where wiring difficulties are encountered, for example factory floors, stock exchanges etc.. Wireless interconnections between LANs located in different buildings have also been provided.

End users may be given nomadic access to a wireless LAN via a central hub. Such access is particularly valuable to endusers who need to transfer large data files from a portable commuter to a backbone information network while returning to their offices. Wireless LANs may also be used to permit ad hoc networking between a group of portable users, e.g. in a class room, or meeting.

It can be expected that nomadic personal computing devices will, in the future, be universally used. Such devices will inevitably need to be networked and will support a variety of network attachments. When they are remotely located from their normal location, such devices will be connected to wireless networks, when used within a home office environment they will be interconnected by infra-red communications links, and when docked they will Use physical wire interconnections. Such devices will, in the not too distant future, replace the current generation of cellular phones, pagers and digital notebooks.

Intelligent wiring hubs and concentrators simplify some of the tasks associated with LAN reconfiguration. Most LANs confine such tasks to a centralized wiring box. Modular and programmable products use a variety of techniques to overlay logical. LAN topologies on the underlying cable distribution system. Some systems even provide software enhancements to assist system administrators to document configuration and management data.

However, station relocation and LAN segment reassignment still demand physical access to the network hub for cable and port rearrangements. Relocated stations must be assigned new IP addresses and other stations must be advised of address changes. Such procedures can be cumbersome, time consuming and expensive to implement, especially when wiring hubs are located in different places. As progressive modifications and updates are made to a LAN, the probability of error grows and documentation becomes out of date. This can result in considerable downtime for a system. Virtual LANs seek to overcome many of these problems.

US-A-5487065 discloses a system for distributed call setup and rerouting in a mobile communications network. At call setup time, a connection tree having a packet switch architecture is defined for a mobile user. A unique connection ID is assigned to the user. In one embodiment, the root of the tree is a switch with an added feature, in the document called ATM Switch/VCI Translator. This translator performs the virtual channel connection rerouting in the mobile user's connection tree. The other switches are ordinary ATM switches. All switches have lookup tables defining every possible port and VCI combinations. The lookup table of an ATM Switch/VCI Translator differs from that of an conventional ATM switch in that only certain rows will be enabled depending on which of the base stations within the tree is serving as the mobile user's access point.

This system requires creation of a connection tree having a complex lookup table defining all possible connections for the mobile user. To perform handoff, rows of the connection tree have to be disabled and enabled requiring signalling to the dedicated translator or switch/rerouter. Even though inter-cell handoffs are shown in one of the figures of the document, only intra-cell handoffs are exemplified in the document. The document is silent on loop elimination and migration of paths to minimise the path length.

The article "Differing Approaches to Virtual LANs", Business Communications review, volume 23, December 1993, page 42 - 45, discusses different approaches to virtual LANs, especially different companies' approaches to mobility, connectivity, bandwidth conservation etc. However, mobility in this article relates to moving workstations and PCs from old to new locations. Handoff between mobile terminals, such as cellular phones, between base stations is not mentioned. There is nothing in this document that leads to the distributed virtual LAN as defined in the present independent claims.

None of the documents disclose the concept of a distributed virtual LAN with mobile terminal initiated handoff procedures.

The present invention is a wireless high speed virtual LAN, particularly adapted for residential and small business use. Wireless access results in low cost and flexibility. Users are able, if necessary, to access a wired enterprise network and be connected to closed user groups at high speed. The VLAN concept enables increased flexibility in terms of system configuration, increased performance and increased security for both users and network operators. Users can logically change their group membership thereby gaining access to different network services without changing their physical location. Terminal mobility is enabled by provision of a seamless handoff scheme. System efficiency is enhanced by use of a path migration scheme which preserves data continuity and is transparent to users.

According to a first aspect of the present invention, there is provided a wireless local area network having a plurality of mobile terminals and a plurality of wireless base stations linked by an infrastructure network, said infrastructure network being an asynchronous transfer mode switched network having a plurality of ATM switching nodes, each switching node maintaining a switch routing database (SRD), and both intra-switch and inter-switch mobility being supported by said infrastructure network, wherein each base station maintains a mobile terminal pair - Virtual Channel Connection (VCC) mapping database (MVD), and terminal mobility is achieved by use of a handoff scheme, and wherein each mobile terminal is arranged to initiate a location query in order to obtain an ATM address for a base station in a new cell, said ATM address being transmitted to the base station in the original cell in a location message.

Central control means may be provided for reconfiguring the wireless local area network by reassigning logical addresses.

Said wireless local area network may be structured into a plurality of logical domains within which traffic can be confined and which exist independently of a mobile terminal's physical location.

Said wireless local area network may include overlapping logical domains.

Preferably, terminal mobility is achieved by use of a seamless handoff scheme.

An individual data direct VCC may be established between each pair of communicating mobile terminals.

An MVD and an SRD may be provided.

A signalling VC may be employed for supporting command channel connections.

A handoff VC may be employed for transmission of messages relating to terminal mobility.

Preferably, said seamless handoff scheme employs the following messages:
- a location message;
- a connection message;
- a routing message; and
- a complete message.

When a moving MT initiates a location query in order to obtain an ATM address for a base station in a new cell, the location query may be transmitted to an original base station as a location message.

When an MT initiates a connection query in order to obtain MT associated data from the MVD, the connection query may be transmitted as a connection message.

A routing message may include data identifying MT-associated VCCs, an originating base station, and a new base station and may enable an ATM switch to identify whether a handoff is inter-switch, or intra-switch.

Preferably, a complete message; containing data on all MT-associated VCCs, is transmitted by an ATM switch, whenever the ATM switch has completed an SRD modification, to a new base station.

Preferably, each MT within an area served by an ATM switch has a unique VCI value.

First means may be provided for determining, after completion of an inter-switch handoff, whether, or not, communication is established over an optimum path, and second means may be provided to migrate said communication to an optimal path, if said path is suboptimal.

A partner message may be employed to transmit an ATM address of a partner BS to an originating BS.

During path migration the flush message protocol of the LAN emulation protocol may be employed to maintain frame order.

According to a second aspect of the present invention, there is provided a method of providing seamless intra-switch handoff in a wireless local area network having a plurality of mobile terminals and a plurality of wireless base stations linked by an infrastructure network, said infrastructure network being an asynchronous transfer mode (ATM) switched network having a plurality of ATM switching nodes, each switching node maintaining a switch routing database (SRD), and both intra-switch and inter-switch mobility being supported by said infrastructure network, for an ATM switching node, of a MT from a first as to a second BS, characterised in that each base station maintains a mobile terminal pair - Virtual Channel Connection (VCC) mapping database (MVD), and by the following steps:
- said MT issues a location query to get the ATM address of said second BS and transmits its result to first BS in a location message, and issues a connection query and transmits its result to said second BS in a connection message;
- the first BS transmits a routing message to the ATM switching node;
- said ATM switching node modifies duples corresponding to said MT-associated VCCs in an SRD located at said ATM switching node;
- said ATM switching node sends a complete message identifying all new virtual path indicator/virtual channel indicator VPI/VCI pairs to said second base station;
- said second base station adds new MT-pair-VCC associated entries to its MVD; and
- the second base station re-starts data transmission.

According to a third aspect of the present invention, there is provided a method of providing seamless inter-switch handoff in a wireless local area network having a plurality of mobile terminals (MT) and a plurality of wireless base stations linked by an infrastructure network, said infrastructure network being an asynchronous transfer mode (ATM) switched network having a plurality of ATM switching nodes, each switching node maintaining a switch routing database (SRD), and both intra-switch and inter-switch mobility being supported by said infrastructure network, of a MT from a first BS, connected to a first ATM switching node, to a second BS, connected to a second ATM switching node,
characterised in that each base station maintains a mobile terminal pair - Virtual Channel Connection (VCC) mapping database (MVD), and by the following steps:
- said MT issues a location query to get the ATM address of the second BS and transmits its result to said first BS in a location message, and issues a connection query and transmits its result to said second BS in a connection message;
- the first BS transmits a routing message to the first ATM switching node;
- the first ATM switching node establishes a switched virtual connection (SVC) to the second base station for each of the MT-associated VCCs;
- said first ATM switching node modifies duples corresponding to said MT-associated VCCs in an SRD located at said first ATM switching node;
- said first ATM switching node transmits a coupling message to the second base station;
- the second base station adds the new MT-pair VCC entry into its MVD; and
- the second base station re-starts data transmission.

If said second ATM switching node detects that an output port and an input port of a mobile connection are identical, so that a longer looped loop path exists, the following steps may be performed:
- said second ATM switching node releases the SVC established for the longer loop path;
- said second ATM switching node sends a routing message to a third adjacent ATM switching node;
- the third ATM switching node establishes a new SVC to the second base station;
- the third ATM switching node searches for a loop path and, if no loop path is detected completes the handoff procedure;
- if said third ATM switch detects a loop path, the above procedure is repeated with a fourth adjacent ATM switching node.

On completion of a handoff procedure for a first MT, in active communication with a second MT, between a first base station and a second base station, said second base station may establish a new VCC to a remote base station, via which the second MT is connected, by executing a routing scheme, and if said VCC differs from the VCC established at handoff, communication may be migrated to the new VCC.

Said routing scheme may be a shortest path scheme.

Frame order may be preserved by using the flush message protocol of the LAN emulation protocol.

Embodiments of the invention will now be described, by way of example, with reference to the accompanying drawings, in which:
Figure 1 is a diagrammatic comparison of a physical traditional LAN with a virtual LAN.
Figure 2 illustrates, in schematic form, a wireless virtual LAN based on an ATM network infrastructure.
Figure 3 is a schematic illustration of intra-switch and inter-switch mobility in a virtual wireless LAN having an ATM network infrastructure.
Figure 4 is a schematic illustration of a virtual wireless LAN, having an ATM network infrastructure, just before handoff.
Figure 5 is a schematic illustration of a virtual wireless LAN, having an ATM network infrastructure, immediately following an intra-switch handoff.
Figure 6 is a schematic illustration of a virtual wireless LAN, having an ATM network infrastructure, immediately following an inter-switch handoff.

To facilitate an understanding of the present invention a glossary of the abbreviations used in the specification is set out below:
- ATM:: Asynchronous Transfer Mode
- BS:: Base Station
- BSA:: Basic Service Area
- BSS:: Basic Service Set
- IP:: Internet Protocol
- LAN:: Local Area Network
- LE:: LAN Emulation
- MAC:: Medium Access Control
- MT:: Mobile Terminal
- MVD:: MT pair-VCC mapping Database
- NNI:: Network Node Interface
- SRD:: ATM Switch Routing Database
- SVC:: Switched Virtual Connection
- UNI:: User Node Interface
- VC:: Virtual Channel
- VCC:: Virtual Channel Connection
- VCI:: Virtual Channel Indicator
- VLAN:: Virtual Local Area Network
- VPI:: Virtual Path Indicator
- WAN:: Wide Area Network

A VLAN has the following characteristics:
- mobility;
- use of logical domains;
- bandwidth control and conservation;
- connectivity;
- security; and
- conservation of investment;
these characteristics are briefly reviewed below.

For a VLAN, as compared to a traditional LAN, the processes associated with system reconfiguration and end changes can be made substantially more dynamic. Traditional LANs must be reconfigured at the switching hub whereas VLANs can be reconfigured, by means of software driven processes, from a central controller, or server. Traditional LANs require that relocated stations be assigned new IP addresses. In a VLAN, only the logical address of relocated stations change, IP addresses remain the same. The VLAN hub performs the translation between IP address and logical address.

The simplest LANs support a single workgroup with a single shared medium communication path. As the number of users and the traffic increases, bridges can be employed to segment a LAN. However, users still share the same amount of bandwidth. Switching hubs use high-bandwidth backplanes to support multiple, separate, LAN segments and to offer dedicated bandwidth to high powered workstations. VLANs permit multiple workgroups, or logical domains, to be defined. Traffic can be restricted to the stations, servers and other resources allocated to a given logical domain. Overlapping, or cross domains, can be created to enable certain members of one domain to access members of another domain. Logical domains exist independently of their members' physical connections and may include members on more than one LAN segment. Because logical domains are easy to reconfigure, users can be regrouped faster and more frequently than is possible in the traditional LAN environment.

VLANs can restrict broadcasts to the logical domain in which they originate. Adding users to one domain does not affect the availability of bandwidth to users in other domains. As requirements change, workstations can be reassigned to other appropriate domains, or the domains themselves can be reconfigured. For example, several users working on a high bandwidth-intensive application might be grouped into a single logical domain.

Most switched hubs restrict connectivity to users sharing the same LAN segment. Bridges, or routers, are needed to connect different segments. In a VLAN environment, bridges and routers can be replaced by overlapping domains and support selective interconnectivity.

VLAN logical domains can be used to confine broadcast traffic to a desired working group and to restrict user access to certain resources.

The price of VLAN capability is concentrated in the cost of the switching hub. However, upgrades to VLAN equipped hubs do not require any changes in wiring, network adapters, management tools, workstations, or workstation software. VLANs allow stations to keep their existing IP addresses as they are reconfigured.

The primary benefit of using a VLAN switching hub is that there is no need for a technician to go to a wiring box and manually change hub port connections. Network managers, or administrators, can reconfigure a network from a central location. The reassignment of a workstation, from one LAN segment to another, is merely a matter of pointing and clicking a mouse on a network diagram on a VDU screen.

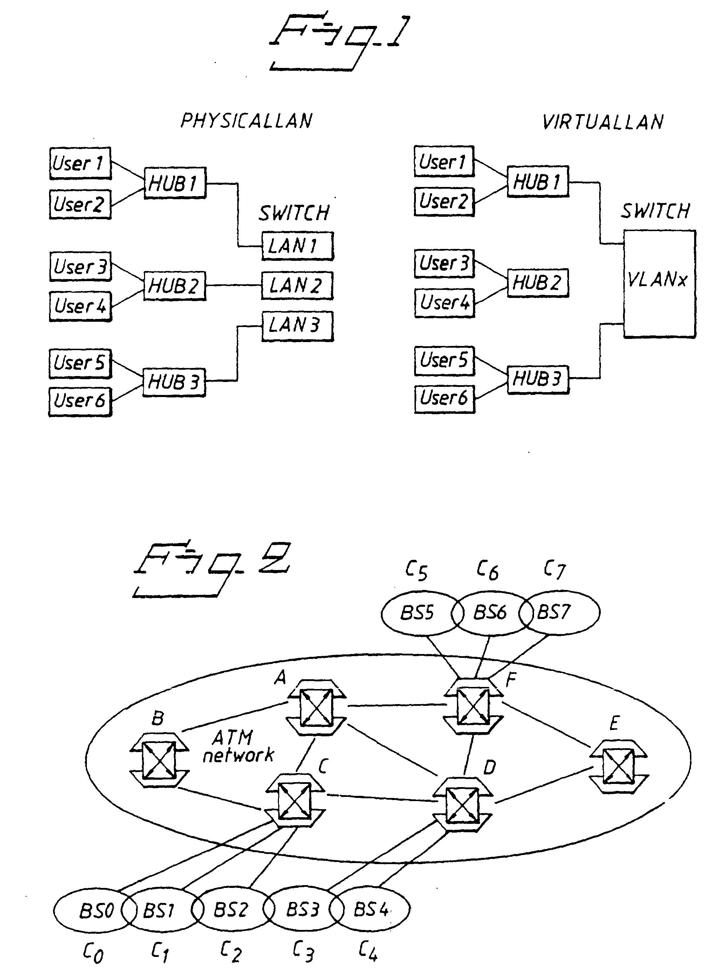

Figure 1 illustrates the difference between a traditional physical LAN and a VLAN. The users on HUB3, of the LAN shown on the left of Figure 1, all share the available bandwidth of the LAN segment. Every physical port is in the HUB and the switch is configured to belong to a particular LAN segment. In the VLAN, illustrated on the right of Figure 1, the HUB, or switch, can handle any number, or combination, of VLAN segments. The configuration is not physical, but rather logical. The switches are able to logically separate different broadcast domains. VLAN architecture offers three key advantages over basic switched LANs:
- logical, rather than physical, updating;
- inter-domain security; and
- reduced broadcast areas.

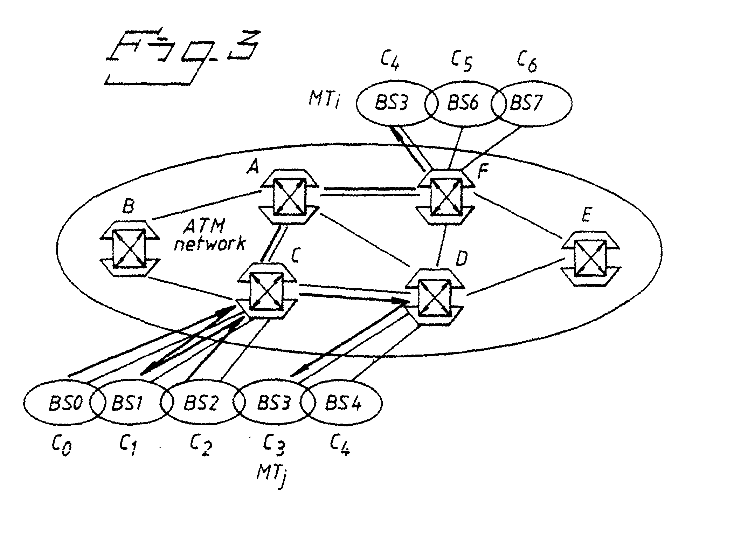

Turning now to Figure 2, there is illustrated a wireless VLAN according to the present invention. The basic building block of the wireless network is a radio cell called a basic service area. Each BSA, C₀ ..... C₇ is covered by a base station, labelled BS0 .... BS7, in Figure 2. The BSs exchange radio signals with mobile stations, not shown in Figure 2. A set of MTs, within a BSA, that are able to mutually communicate, is referred to as a Basic Service Set, or BSS. A wireless VLAN which comprises a single BSS has a limited range and can operate only within a local environment. To overcome the problem of range, several BSSs must be interconnected. This interconnection may be achieved via a wireline infrastructure network, a WAN, or the Internet. In such a system, BSs provide a wireless communications link between the backbone infrastructure network and mobile terminals. The backbone infrastructure network of the present invention is a switched ATM network comprising ATM switching nodes A ..... F, see Figure 2. The ATM network can operate on the basis of the LAN emulation (LE) defined in the ATM Forum. The LE enables, inter alia, connectivity between LAN bridges. One property of such a network is that all ATM cells, for frames transmitted between two LANs, are assigned the same VPI/VCI. The cells of the frame are reassembled at the destination bridge which forwards those cells to the final destination station, in accordance with the MAC address. This means that ATM switches along the VCC cannot distinguish cells from different frames. Since terminal mobility is one of the key objectives of the present invention, the realisation of handoff between BSs must be given careful consideration.

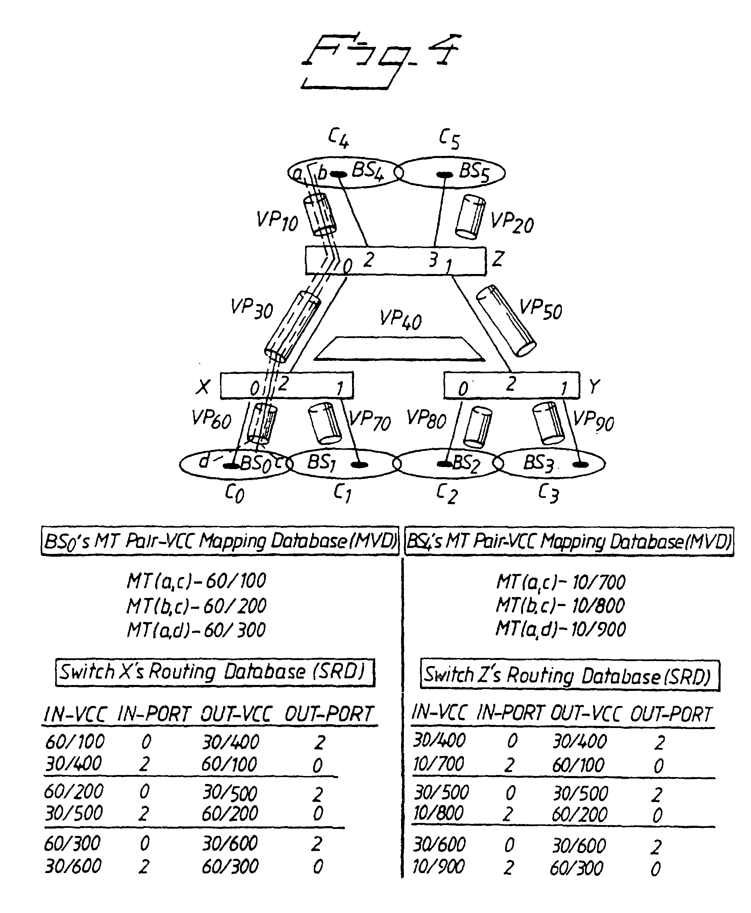

Mobility, i.e. movement of a MT during the process of data communication, can be classified into one of two categories, intra-switch mobility and inter-switch mobility. These two categories of mobility are described, below, with reference to Figure 3. Intraswitch mobility occurs where handoff is between two BSs connected to the same ATM switching node, whereas inter-switch mobility occurs where handoff is between two BSs connected to different ATM switching nodes.

Consider the following example. An ATM switch is connected to several BSs, each of which covers a single BSA. Assume that a mobile terminal MTⱼ is in the process of moving from BSA Cᵢ to BSA Cⱼ, having base stations BSᵢ and BSⱼ, respectively, both of which are connected to the same ATM switching node. In this case the mobility is intra-switch mobility. On the other hand, if BSᵢ and BSⱼ had been connected to different ATM switching nodes, the handoff, (mobility), between BSᵢ and BSⱼ would have been inter-switch. The mechanism by which all frames transmitted between a pair of LANs shares a VCC, as defined by the ATM Forum, is not well suited for use in a wireless LAN because of terminal mobility.

Consider the simple mobility case illustrated in Figure 3, where two mobile terminals MTⱼ and MTᵢ located in BSAs C₀ and C₅ are in the process of mutual communication. If MTⱼ moves from BSA C₀ to C₁, an intra-switch handoff is required. To achieve this, ATM cells routed to MTⱼ from MTᵢ must be forwarded from BS0 to BS1 by ATM switch C. However, ATM switches lack the capability to distinguish which cells on the VCC should be forwarded to BS1 rather than BS0. Thus, the only way to provide a seamless handoff is to establish a new VCC, designated VCC(0,1) between BS0 and BS1. In other words, BS0 must reassemble ATM cells destined for MTⱼ, check the destination address, which will have changed following the handoff, segment the ATM cells into ATM frames and forward the cells via the newly established VCC(0,1) to BS1. This approach is simple and straight forward and enables the original scheme for interconnection of wireline LANs to be applied directly. However, the communication path between MTⱼ and MTᵢ has been elongated, e.g. VCC(5,0) must be extended by the addition of VCC(0,1). This problem of path elongation is more serious in the case of inter-switch handoff. Consider the case in which MTⱼ moves from BSA C0 to BSA C3. In this case the communication path from MTᵢ to MTⱼ would be elongated from VCC(5,0) to VCC(5,0) + VCC(0,1) + VCC(1,2) + VCC(2,3), as shown in Figure 3. It is clearly desirable to have some mechanism which will permit an elongated communication path, to be migrated to a shorter communication path should such a shorter path be available. For example, as can be seen from Figure 3, it would be beneficial if path VCC(5,0) + VCC(0,1) + VCC(1,2) + VCC(2,3) could be migrated to a shorter path such as (BS5, F, A, D, BS3), or (BS5, F, D, BS3).

An intra-switch handoff can be readily achieved by informing the ATM switch node involved, (only one switch node is involved in an intra-switch handoff), to change the data path from one port to another, internally. Where an inter-switch handoff is required, it may be necessary to establish a shorter VCC, if possible. Thus, path migration is recommended as a means of changing an inefficient communications path to a more efficient communications path.

A seamless handoff scheme must satisfy the following requirements:
- data continuity;
- transparent to other mobile terminals; and
- minimum routing load (elongated communication path) in the infrastructure network.

If seamless handoff is to be efficiently achieved, a pair of MTs in active communication must establish an individual data direct VCC. Given that an individual data direct VCC is established, it is relatively easy to achieve the requirements listed above.

Each pair of communicating MTs has an individual virtual connection which is identified by a virtual channel identifier (VPI/VCI). Thus, each BS must maintain an MT pair-VCC mapping database, usually referred to as an MVD. At each ATM switching node, the incoming VCC (in-VCC) and incoming port (in-port), for a received ATM cell, are used as indices in the SRD to enable the outgoing port (out-port) and outgoing VCC (out-VCC), associated with the next link, to be uniquely identified. Thus, at each switching node, the mapping table (in-VCC, in-port, out-VCC, out-port) uniquely defines a VCC.

A predefined VPI/VCI value, VPI = 0 and VCI = 5 are used to support command channel connections, i.e. the signalling VC. These connections are established in real time using appropriate signalling procedures.

A handoff VC is defined by appropriate VPI/VCI values and is used to carry messages relating to MT mobility and handoff. The handoff VC is a point-to-point connection between a BS and an ATM switching node, or between two ATM switching nodes.

For the sake of simplicity, the term "mobile connection" is used to refer to the virtual connection between any pair of MTs. These mobile connections are dynamically established by signalling protocols.

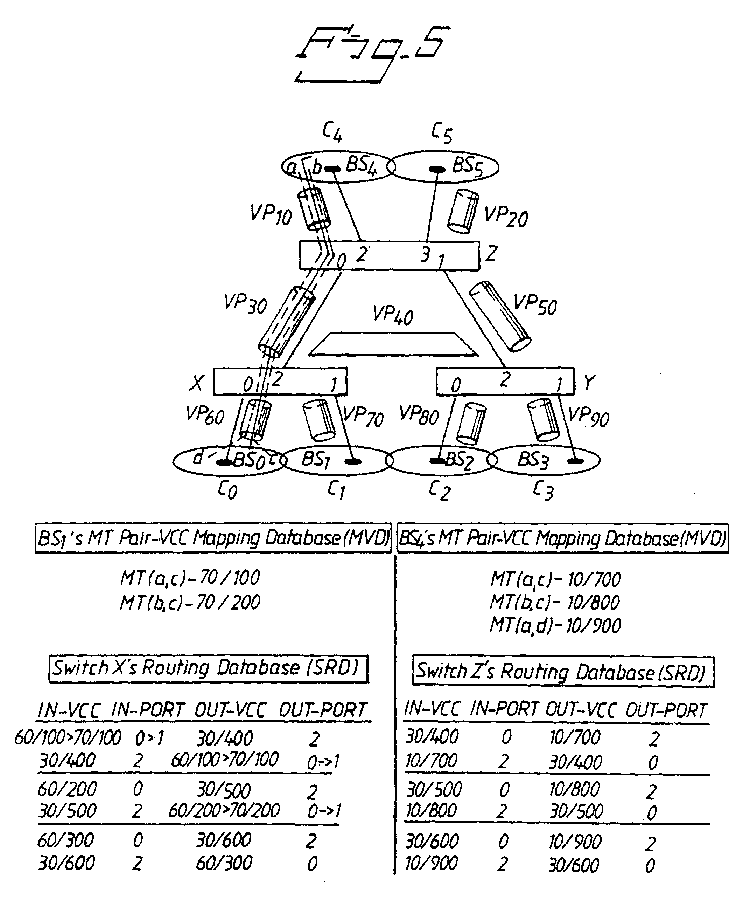

Consider now, by way of example, the connection topology illustrated in Figure 4. Figure 4 shows three ATM switching nodes X, Y, Z and six BSAs, C₀ to C₅. Base stations (BS₀, BS₁), (BS₂, BS₃) and (BS₄, BS₅) are connected to ATM switches X, Y and Z respectively. Initially there are three mobile connections, namely (a,c), (b,c) and (a,d). Each mobile connection is identified by a sequence of VPI/VCI values, for (a,c), (b,c) and (a,d), these are:
(a,c) - (10/700,30/400,60/100);
(b,c) - (10/800,30/500,60/200); and
(a,d) - (10/900,30/600,60/300).

The VPI values are based on the assignment of virtual paths between two ATM switching nodes, or between an ATM switching node and a BS. Two, or more, MT handoff processes cannot be handled at the same time within an ATM switching node. It is, therefore, necessary to provide a mechanism for resolving handoff conflicts between MTs located within an area served by a single ATM switching node and having a unique VCI value. In the present example, the VCI is randomly selected and used only to identify an end-to-end mobile connection. The contents of the MVDs in BS₀ and BS₄, together with the contents of the SRDs in ATM switching nodes X and Z, are also shown in Figure 4.

In order to perform a seamless intra-switch handoff, it is necessary to define some handoff messages to be used in the handoff process. There are four types of handoff message:
- location message: The moving MT initiates a location query to get the ATM address of the base station of a new BSA (ATM BS_{new}) and transmits it to the base station in the original BSA (BS_{original}) in a location message.
- connection message: The moving MT initiates a connection query to obtain its own MT-associated information from BS_{original}, i.e. the contents of the MVD, and sends it to BS_{new} in a connection message.
- routing message: BS_{original} sends a routing message containing (MT-associated VCCs; ATM BS_{original}; ATM BS_{new}) to the attached ATM switch via a handoff VC. On the basis of the user/network node (UNI/NNI) signalling information, the ATM switch can identify whether a handoff is an inter-switch handoff, or an intra-switch handoff. Depending on the MT-associated VCCs, the ATM switch can alter the corresponding duples in the SRD to modify the communications path.
- Complete message: Whenever the ATM switch has completed SRD modifications, it sends a complete message with all MT-associated VCCs to BS_{new}.

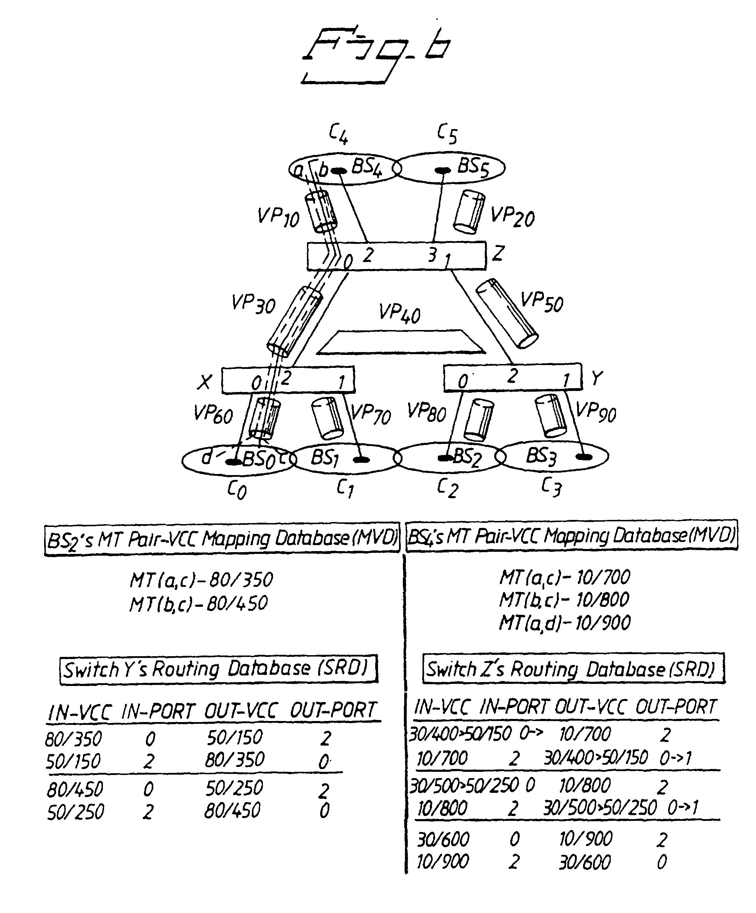

An example of the procedure used to handle intra-switch handoff will now be described with reference to Figure 5, which shows the connection topology illustrated in Figure 4 after a mobile MT_{c} has moved from BSA C₀ to C₁. It is assumed that MT_{c} has initiated location and connection queries. It should be noted that MT_{c} has two mobile connections, namely with MTₐ and MT_{b}. The steps used to implement an intra-switch handoff are as follows:
1. MT_{c} issues a location message containing the ATM address of BS₁ and BS₀, and a connection message with MT(a,c) - 60/100 and MT(b,c) - 60/200 to BS₁.
2. BS₀ then sends a routing message (60/100, 60/200, ATM BS₁) to ATM switching node X.
3. ATM switching node X modifies the corresponding duples of the MT-associated VCCs in the SRD and issues a complete message with all new VPI/VCI pairs, i.e. VCCs 70/100 and 70/200 to BS₁.
4. BS₁ adds the new MT-pair-VCC entries to its MVD and restarts the data transmission procedure.

Figure 5 shows the mobile connections and the contents of the corresponding MVDs and SRDs after the intra-switch handoff. The data paths are changed, from one ATM switch port to another, internally. The routing load on the ATM network due to intra-switch handoff is minimized and the communications path (VCC) is not elongated. Moreover, the MVD of BS₄ is not changed.

In the case of an inter-switch seamless handoff, it is important to reduce the length of the elongated path formed by the handoff procedure as much as possible. It is also important to avoid extra reassembly procedures for ATM frames. This can be achieved by elongating the communication path from an ATM switch which is common to the communication paths to the old BS and the new BS. To achieve continuity of frame forwarding at the new BS, an additional message, "Coupled Message", is defined to identify the relationship between the elongated path and the corresponding pair of MTs. The coupled message is defined as follows:
- coupled message: For each of the MT associated VCCs of the moving MT, the ATM switching node connecting the old BS establishes a point-point switched virtual connection (SVC) to the new BS for the elongated path via the .signalling protocol. The new BS then receives the VPI/VCI value for the elongated path and the MT-associated VCC, and the frames for the MT can then be forwarded again.

Consider an example of inter-switch handoff, with reference to Figure 6. Assume that MT_{c}, located in BSA C₁, moves to BSA C₂. Since C₁ and C₂ are associated with different switching nodes, X and Y respectively, an inter-switch handoff will be required, as opposed to an intra-switch handoff. The inter-switch handoff scheme requires performance of the following steps:
1. MT_{c} sends a location message, with the address of BS₂, to BS1. MT_{c} also sends a connection message with MT(a,c) - 70/100 and MT(b,c) - 70/200 to BS₂.
2. BS₁ then sends a routing message, (70/100, 70/200; ATM BS₁; ATM BS₂), to ATM switching node X.
3. ATM switch X establishes a SVC to BS₂ for each of the MT-associated VCCs (70/100 and 70/200), modifies the corresponding duples in its SRD, and sends a couple message with VCC 70/100 (70/200) to BS₂.
4. BS₂ adds the new MT-pair VCC entry into its MVD and restarts the data transmission procedure.
5. If the ATM switching node X detects that the output port and input port of a mobile. connection are identical, i.e. a loop has occurred, it first releases the SVC established for the elongated path and sends a routing message to the adjacent ATM switching node, Z in the case of the present example, in the mobile connection path. The adjacent ATM switching node then establishes a new SVC to the new BS for the elongated path and also goes into a loop detection phase. If there is no loop, the handoff procedure is complete, otherwise this step of the procedure is repeated until all loops have been eliminated, working steadily back through the chain of ATM switching nodes in the mobile communication path, (in the present example this chain is only two switching nodes long).

Once handoff is completed, the elongated path created by inter-switch handoff has been reduced as much as possible by the handoff procedure itself. However, it is quite possible that the elongated path is not the shortest path between the two communicating MTs. A path migration can, if necessary, be applied to migrate the communications path created in the handoff process to a better path. Path migration is thus performed after completion of an inter-switch handoff. In the case of intra-switch handoff there is no need to consider path migrations, i.e. rerouting.

When an inter-switch handoff occurs, the BS for the new BSA first establishes a VCC to the remote BS by executing a routing scheme, e.g. a shortest path scheme. This causes the communication path to migrate to a new, more efficient, path. The flush message protocol of the LAN emulation protocol can be used to maintain the frame order. The establishment and selection of a path between two ATM end stations, suggested in the ATM forum P-NNI, are based on performing a shortest path computation. For the sake of simplicity, the shortest path algorithm can be used with the present invention to find a new path in the migration scheme set out above. This ensures that delays are reduced and bandwidth consumption is minimised by establishment of a virtual connection. If the migration scheme produces a communication path which differs from the communication path established by handoff, then the existing communication path is migrated to the new path, else the original communications path is retained.

A new end-to-end virtual connection must be established for a migrated path. A partner message is used to convey the ATM address of the destined partner BS to the originating BS. A partner message can be defined as follows:
- Partner message: For each of the MT-associated VCCs, the moving MT initiates a location query to obtain the ATM address of the destined partner BS (ATM BSₚₐᵣₜₙₑᵣ) and sends a partner message with this ATM address to the BS in the new BSA. The partner message contains all the MT-associated VCCs for the moving MT tagged with the corresponding ATM addresses, each for a partner BS.

## Claims

1. A wireless local area network having a plurality of mobile terminals (MT) and a plurality of wireless base stations (BS) linked by an infrastructure network, said infrastructure network being an asynchronous transfer mode (ATM) switched network having a plurality of ATM switching nodes (X, Y, Z), each switching node (X, Y, Z) maintaining a switch routing database (SRD), and both intra-switch and inter-switch mobility being supported by said infrastructure network, **characterised in that** each base station (BS) maintains a mobile terminal pair - Virtual Channel Connection (VCC) mapping database (MVD), and terminal mobility is achieved by use of a handoff scheme **in that** each mobile terminal (MT) is arranged to initiate a location query in order to obtain an ATM address (ATM BS_{new}) for a base station in a new cell, said ATM address (ATM BS_{new}) being transmitted to the base station (BS_{original}) in the original cell in a location message.

2. A wireless local area network as claimed in claim 1, **characterised in that** central control means are provided for reconfiguring the wireless local area network by reassigning logical addresses.

3. A wireless local area network as claimed in either claim 1, or 2, **characterised in that** said wireless local area network is structured into a plurality of logical domains within which traffic can be confined and which exist independently of a mobile terminal's physical location.

4. A wireless local area network as claimed in claim 3, **characterised in that** said wireless local area network includes overlapping logical domains.

5. A wireless local area network as claimed in any of claims 1 to 4, **characterised in that** an individual data direct virtual channel connection (VCC) is established between each pair of communicating mobile terminals (MT).

6. A wireless local area network as claimed in any of claims 1 to 5, **characterised in that** a signalling virtual channel (VC) is employed for supporting command channel connections.

7. A wireless local area network as claimed in any of claims 1 to 6, **characterised in that** a handoff virtual channel (VC) is employed for transmission of messages relating to terminal mobility.

8. A wireless local area network as claimed in any of claims 1 to 7, **characterised in that** said handoff scheme employs the following messages:
- a location message;
- a connection message;
- a routing message; and
- a complete message.

9. A wireless local area network as claimed in any of claims 1 to 8, **characterised in that** an MT is arranged to initiate a connection query in order to obtain MT associated VCC from the BS_{original}, and to transmit the result of the connection query to BS_{new} in a connection message.

10. A wireless local area network as claimed in any of claims 1 to 9, **characterised in that** a routing message includes MT-associated VCCs, an originating base station, and a new base station and enables an ATM switch to identify whether a handoff is inter-switch, or intra-switch.

11. A wireless local area network as claimed in any of claims 1 to 10, **characterised in that** an ATM switch is arranged to transmit, whenever the ATM switch has completed an SRD modification, a complete message, containing all MT-associated VCCs, to a new base station (BS_{new}) .

12. A wireless local area network as claimed in any previous claim, **characterised in that** each MT within an area served by an ATM switch has a unique virtual channel indicator (VCI) value.

13. A wireless local area network as claimed in any previous claim, **characterised in that** first means are provided for determining, after completion of an inter-switch handoff, whether, or not, communication is established over an optimum path, and **in that** second means are provided to migrate said communication to an optimal path, if said path is suboptimal.

14. A wireless local area network as claimed in claim 13, **characterised in that** a partner message is employed to transmit an ATM address of a partner BS to an originating BS (BS_{original}).

15. A wireless local area network as claimed in claim 13 or 14, **characterised in that** during path migration the flush message protocol of the LAN emulation protocol is employed to maintain frame order.

16. A method of providing seamless intra-switch handoff in a wireless local area network having a plurality of mobile terminals (MT) and a plurality of wireless base stations (BS) linked by an infrastructure network, said infrastructure network being an asynchronous transfer mode (ATM) switched network having a plurality of ATM switching nodes (X, Y, Z), each switching node (X, Y, Z) maintaining a switch routing database (SRD), and both intra-switch and inter-switch mobility being supported by said infrastructure network, for an ATM switching node, of a MT from a first BS (BS₀) to a second BS (BS₁), **characterised in that** each base station (BS) maintains a mobile terminal pair - Virtual Channel Connection (VCC) mapping database (MVD), and by the following steps:
said MT issues a location query to get the ATM address of said second BS (BS₁) and transmits its result to first BS (BS₀) in a location message, and issues a connection query and transmits its result to said second BS (BS₁) in a connection message;
the first BS (BS₀) transmits a routing message to the ATM switching node (X);
said ATM switching node (X) modifies duples corresponding to said MT-associated VCCs in an SRD located at said ATM switching node (X);
said ATM switching node (X) sends a complete message identifying all new virtual path indicator/virtual channel indicator VPI/VCI pairs to said second base station (BS₁);
said second base station (BS₁) adds new MT-associated VCCs to its MVD; and
the second base station (BS₁) re-starts data transmission.

17. A method of providing seamless inter-switch handoff in a wireless local area network having a plurality of mobile terminals (MT) and a plurality of wireless base stations (BS) linked by an infrastructure network, said infrastructure network being an asynchronous transfer mode (ATM) switched network having a plurality of ATM switching nodes (X, Y, Z), each switching node (X, Y, Z) maintaining a switch routing database (SRD), and both intra-switch and inter-switch mobility being supported by said infrastructure network, of a MT from a first BS (BS₁), connected to a first ATM switching node (X), to a second BS (BS₂), connected to a second ATM switching node (Y), **characterised in that** each base station (BS) maintains a mobile terminal pair - Virtual Channel Connection (VCC) mapping database (MVD), and by the following steps:
said MT issues a location query to get the ATM address of the second BS (BS₂) and transmits its result to said first BS (BS₁) in a location message, and issues a connection query and transmits its result to said second BS (BS₂) in a connection message;
the first BS (BS₁) transmits a routing message to the first ATM switching node (X);
the first ATM switching node (X) establishes a switched virtual connection (SVC) to the second base station (BS₂) for each of the MT-associated VCCs;
said first ATM switching node (X) modifies duples corresponding to said MT-associated VCCs in an SRD located at said first ATM switching node (X);
said first ATM switching node (X) transmits a coupling message to the second base station (BS₂);
the second base station (BS₂) adds the new MT-associated VCC into its MVD; and
the second base station (BS₂) re-starts data transmission.

18. A method as claimed in claim 17, **characterised in that**, if said first ATM switching node (X) detects that an output port and an input port of a mobile connection are identical, so that a longer looped loop path exists, the following steps are performed:
said first ATM switching node (X) releases the SVC established for the longer loop path;
said first ATM switching node (X) sends a routing message to a third adjacent ATM switching node (Z);
the third ATM switching node (Z) establishes a new SVC to the second base station (BS₂);
the third ATM switching node (Z) searches for a loop path and, if no loop path is detected completes the handoff procedure;
if said third ATM switch (Z) detects a loop path, the above procedure is repeated with a fourth adjacent ATM switching node.

19. A method as claimed in any of claims 16 to 18, **characterised in that**, on completion of a handoff procedure for a first MT, in active communication with a second MT, between a first base station and a second base station, said second base station establishes a new VCC to a remote base station, via which the second MT is connected, by executing a routing scheme, and if said VCC differs from the VCC established at handoff, migrates communication to the new VCC.

20. A method as claimed in claim 19, **characterised in that** said routing scheme is a shortest path scheme.

21. A method as claimed in either claim 19, or 20, **characterised in that** frame order is preserved by using the flush message protocol of the LAN emulation protocol.

## Patentansprüche

1. Drahtloses lokales Netzwerk mit einer Anzahl von mobilen Terminals (MT) und einer Anzahl von drahtlosen Basisstationen (BS), die durch ein Infrastrukturnetzwerk gekoppelt sind, wobei das Infrastrukturnetzwerk ein durch einen asynchronen Übertragungsmodus (ATM) vermitteltes Netzwerk ist, das eine Anzahl von ATM-Schaltknoten (X, Y, Z) hat, wobei jeder Schaltknoten (X, Y, Z) eine Schalt-Routing-Datenbasis (SRD) aufrechterhält, und sowohl die Intraschalt- als auch Interschaltmobilität durch dieses Infrastrukturnetzwerk unterhalten wird, ***dadurch gekennzeichnet,* dass** jede Basisstation (BS) eine mobile Terminalpaar-virtuelle Kanalverbindungs-(VCC)-Mapping-Datenbasis (MVD) auftrechterhält, und die Terminalmobilität unter Verwendung eines Übergabeschemas erzielt wird, in dem jede mobile Terminal (MT) so angeordnet ist, das er eine Ortsanfrage initiert, um eine ATM-Adresse (ATM-BS_{new}) für eine Basisstation in einer neuen Zelle zu erhalten, wobei die ATM-Adresse (ATM-BS_{new}) auf die Basisstation (BS_{original}) in der Originalzelle in einer Ortsmitteilung übertragen wird.

2. Drahtloses lokales Netzwerk nach Anspruch 1, ***dadurch gekennzeichnet,* dass** für die Rekonfigurierung des drahtlosen lokalen Netzwerkes durch Neuzuweisen von logischen Adressen eine zentrale Steuerungsvorrichtung vorgesehen ist.

3. Drahtloses lokales Netzwerk nach Anspruch 1 oder 2, ***dadurch gekennzeichnet,* dass** das drahtlose lokale Netzwerk in einer Anzahl von logischen Domänen strukturiert ist, innerhalb welcher der Verkehr eingegrenzt werden kann, und die unabhängig von dem physikalischen Ort eines mobilen Terminals existieren.

4. Drahtloses lokales Netzwerk nach Anspruch 3, ***dadurch gekennzeichnet,* dass** das drahtlose lokale Netzwerk einander überlappende logische Domänen enthält.

5. Drahtloses lokales Netzwerk nach einem der Ansprüche 1 bis 4, ***dadurch gekennzeichnet,* dass** zwischen jedem Paar kommunizierender mobiler Terminals (MT) eine individuelle Daten-direkt-virtuelle Kanalverbindung (VCC) errichtet wird.

6. Drahtloses lokales Netzwerk nach einem der Ansprüche 1 bis 5, ***dadurch gekennzeichnet,* dass** für das Unterhalten der Befehlskanalverbindungen ein virtueller Signalgabekanal (VC) verwendet wird.

7. Drahtloses lokales Netzwerk nach einem der Ansprüche 1 bis 6, ***dadurch gekennzeichnet,* dass** für das Übertragen von Mitteilungen bezüglich der Terminalmobilität ein virtueller Übergabekanal (VC) verwendet wird.

8. Drahtloses lokales Netzwerk nach einem der Ansprüche 1 bis 7, ***dadurch gekennzeichnet,* dass** das Übergabeschema die folgenden Mitteilungen verwendet:
- eine Ortsmitteilung;
- eine Verbindungsmitteilung;
- eine Routingmitteilung; und
- eine Vollmitteilung.

9. Drahtloses lokales Netzwerk nach einem der Ansprüche 1 bis 8, ***dadurch gekennzeichnet,* dass** ein MT angeordnet ist, um eine Verbindungsanfrage zu initieren, um von der BS_{original} ein dem VCC zugeordnetes MT zu erhalten, und um das Ergebnis der Verbindungsanfrage in einer Verbindungsmitteilung an die BS_{new} zu übertragen.

10. Drahtloses lokales Netzwerk nach einem der Ansprüche 1 bis 9, ***dadurch gekennzeichnet,* dass** die Routingmitteilung MT-zugeordnete VCCs, eine ursprüngliche Basisstation und eine neue Basisstation enthält und einen ATM-Schalter in die Lage versetzt, zu identifizieren, ob die Übergabe ein Interschalter oder ein Intraschalter ist.

11. Drahtloses lokales Netzwerk nach einem der Ansprüche 1 bis 10, ***dadurch gekennzeichnet,* dass** ein ATM-Schalter angeordnet ist, der immer dann, wenn der ATM-Schalter eine SRD-Modifikation beendet hat, eine Vollmitteilung, die alle MT-zugehörigen VCCs enthält, auf eine neue Basisstation (BS_{new}) überträgt.

12. Drahtloses lokales Netzwerk nach einem der vorstehenden Ansprüche, ***dadurch gekennzeichnet,* dass** jedes MT innerhalb eines Bereiches, der durch einen ATM-Schalter bedient wird, einen eindeutigen virtueller-Kanalindikator-(VCI)-Wert hat.

13. Drahtloses lokales Netzwerk nach einem der vorstehenden Ansprüche, ***dadurch gekennzeichnet,* dass** erste Mittel vorgesehen sind, um nach Beendigung einer Inter-Schalt-Übergabe zu bestimmen, ob eine Verbindung über einen optimalen Weg errichtet worden ist oder nicht, und dass zweite Mittel vorgesehen sind, um die Verbindung auf einen optimalen Weg zu ziehen, wenn der Weg nicht optimal ist.

14. Drahtloses lokales Netzwerk nach Anspruch 13, ***dadurch gekennzeichnet,* dass** eine Partnermitteilung verwendet wird, um eine ATM-Adresse einer Partner-BS an eine ursprüngliche BS (BS_{original}) zu übertragen.

15. Drahtloses lokales Netzwerk nach Anspruch 13 oder 14, ***dadurch gekennzeichnet,* dass** während der Wegwanderung das Flussmitteilungsprotokoll des LAN-Emulationsprotokolls verwendet wird, um die Ganzbildreihenfolge aufrechtzuerhalten.

16. Verfahren zum Schaffen einer nahtlosen Intra-Schalter-Übergabe in einem drahtlosen lokalen Netzwerk mit einer Anzahl von Mobilterminals (MT) und einer Anzahl von drahtlosen Basisstationen (BS), die durch ein Infrastrukturnetzwerk gekoppelt sind, wobei das Infrastrukturnetzwerk ein im asynchronen Übertragungsmodus (ATM) geschaltetes Netzwerk ist, mit einer Anzahl von ATM-Schaltknoten (X, Y, Z), wobei jeder Schaltknoten (X, Y, Z) eine Schalt-Routing-Datenbasis (SRD) aufrechterhält, und sowohl die Intra-Schaltals auch Inter-Schalt-Mobilität durch das Infrastruktumetzwerk für einen ATM-Schaltknoten von einem MT von einer ersten BS (BS₀) bis zu einer zweiten BS (BS₁) unterstützt wird, ***dadurch gekennzeichnet,* dass** jede Basisstation (BS) eine Mobilterminalpaarvirtuelle Kanalverbindungs-(VCC)-Mapping-Datenbasis (MVD) aufrechterhält, und durch die folgenden Schritte:
das MT gibt eine Ortsanfrage aus, um die ATM-Adresse der zweiten BS (BS₁) zu erhalten und ihr Ergebnis an die erste BS (BS₀) in einer Ortsmitteilung überträgt, und ihr Ergebnis an die zweite BS (BS₁) in einer Verbindungsmitteilung überträgt;
die erste BS (BS₀) überträgt eine Routingmitteilung an den ATM-Schaltknoten (X);
die ATM-Schaltknoten (X) Doppel modifiziert entsprechend den MT-zugehörigen VCCs in einer SRD, die an dem ATM-Schaltknoten (X) lokalisiert ist,
der ATM-Schaltknoten (X) schickt an die zweite Basisstation (BS₁) eine Vollmitteilung, die alle Paare neuer virtueller Wegindikatör/virtueller Kanalindikator VPI/VCI identifiziert;
wobei die zweite Basisstation (BS₁) die neuen MT-zugeordneten VCCs ihrer MVD addiert; und
die zweite Basisstation (BS₁) die Datenübertragung erneut startet.

17. Verfahren zum Schaffen einer nahtlosen Inter-Schalt-Übergabe in einem drahtlosen lokalen Netzwerk mit einer Anzahl von mobilen Terminals (MT) und einer Anzahl von drahtlosen Basisstationen (BS), die in einem Infrastrukrurnetzwerk gekoppelt sind, wobei das Infrastrukturnetzwerk ein im asynchronen Übertragungsmodus (ATM) geschaltetes Netzwerk ist, mit einer Anzahl von ATM-Schaltknoten (X, Y, Z), wobei jeder Schaltknoten (X, Y, Z) eine Schalt-Routing-Datenbasis (SRD) aufrechterhält und sowohl die Intra-Schalt- als auch die Inter-Schalt-Mobilität durch das Infrastruktmnetzwerk unterhalten wird, von einem MT von einer ersten BS (BS₁), die an einen ersten ATM-Schaltknoten (X) angeschlossen ist, auf eine zweite BS (BS₂), die an einen zweiten ATM-Schalknoten (Y) angeschlossen ist, ***dadurch gekennzeichnet,* dass** jede Basisstation (BS) eine Mobilterminalpaar-virtuelle Kanalverbindung (VCC)-Mapping-Datenbasis (MVD) aufrechterhält, und **gekennzeichnet durch** die folgenden Schritte:
dass das MT eine Ortsanfrage ausgibt, um die ATM-Adresse der zweiten BS (BS₂) zu erhalten und ihr Ergebnis auf die erste BS (BS₁) in einer Ortsmitteilung überträgt und eine Verbindungsanfrage ausgibt und ihr Ergebnis an die zweite BS (BS₂) in einer Verbindungsmitteilung überträgt;
die erste BS (BS₁) eine Routingmitteilung an den ersten ATM-Schaltknoten (X) überträgt;
der erste ATM-Schaltknoten (X) eine geschaltete virtuelle Verbindung (SVC) zur zweiten Basisstation (BS₂) für jedes dem MT-zugeordnete VCC errichtet;
wobei der erste ATM-Schaltknoten (X) Doppel entsprechend der MT-zugeordneten VCCs in einer SRD, die in den ersten ATM-Schaltknoten (X) lokalisiert ist, modifiziert;
wobei der erste ATM-Schaltknoten (X) eine Kopplungsmitteilung an die zweite Basisstation (BS₂) überträgt;
die zweite Basisstation (BS₂) den neuen MT-zugeordneten VCC in ihrer MVD addiert; und
die zweite Basisstation (BS₂) die Datenübertragung erneut startet.

18. Verfahren nach Anspruch 17, ***dadurch gekennzeichnet,* dass** wenn der erste ATM-Schaltknoten (X) detektiert, dass ein Ausgangsport und ein Eingangsport einer mobilen Verbindung identisch sind, so dass ein längerer Schleifenpfad existiert, die folgenden Schritte durchgeführt werden:
der erste ATM-Schaltknoten (X) gibt den für den längeren Schleifenpfad errichteten SVC frei;
der erste ATM-Schaltknoten (X) schickt eine Routingmitteilung an einen dritten benachbarten ATM-Schaltknoten (Z);
der dritte ATM-Schaltknoten (Z) errichtet einen neuen SVC an der zweiten Basisstation (BS₂);
der dritte ATM-Schaltknoten (Z) sucht nach einem Schleifenpfad und wenn kein Schleifenpfad detektiert wird, beendet den Übergabevorgangt;
wenn der dritte ATM-Schalter (Z) einen Schleifenpfad detektiert, wird der vorstehende Vorgang mit einem vierten benachbarten ATM-Schaltknoten wiederholt.

19. Verfahren nach einem der Ansprüche 16 bis 18, ***dadurch gekennzeichnet,* dass** bei Beendigung die Übergabevorganges für ein erstes MT in aktiver Kommunikation mit einem MT zwischen einer ersten Basisstation und einer zweiten Basisstation die zweite Basisstation einen neuen VCC zu einer entfernt liegenden Basisstation errichtet, über welche das zweite MT verbunden wird, durch Durchführen eines Routingschemas und wenn der VCC sich von dem VCC unterscheidet, der bei der Übergabe errichtet worden ist, die Kommunikation auf den neuen VCC zieht.

20. Verfahren nach Anspruch 19, ***dadurch gekennzeichnet,* dass** das Routingschema ein kürzester-Weg-Schema ist.

21. Verfahren einem der Ansprüche 19 oder 20, ***dadurch gekennzeichnet,* dass** die Ganzbildreihenfolge unter Verwendung des Flussmitteilungsprotokolls des LAN-Emulationsprotokolls bewahrt wird.

## Revendications

1. Réseau local sans fil ayant une pluralité de terminaux mobiles (MT) et une pluralité de stations de base sans fil (BS) reliées par un réseau d'infrastructure, le dit réseau d'infrastructure étant un réseau commuté à mode de transfert asynchrone (ATM) ayant une pluralité de noeuds de commutation ATM (X, Y, Z), chaque noeud de commutation (X, Y, Z) maintenant une base de données d'acheminement de commutateur (SRD), et une mobilité à la fois intra-commutateur et inter-commutateur étant assurée par le dit réseau d'infrastructure, **caractérisé en ce que** chaque station de base (BS) maintient une base de données de mappage (MVD) de paire de terminaux mobiles - connexion de canal virtuel (VCC), et la mobilité des terminaux est obtenue par utilisation d'une procédure de transfert selon laquelle chaque terminal mobile (MT) est agencé pour déclencher une interrogation de position afin d'obtenir une adresse ATM (ATM BSₙₒᵤᵥₑₐᵤ) pour une station de base dans une nouvelle cellule, la dite adresse ATM (ATM BSₙₒᵤᵥₑₐᵤ) étant transmise à la station de base (BS_{original}) dans la cellule originale, dans un message de position.

2. Réseau local sans fil selon la revendication 1, **caractérisé en ce que** des moyens de commande centrale sont prévus pour reconfigurer le réseau local sans fil par réaffectation d'adresses logiques.

3. Réseau local sans fil selon la revendication 1 ou 2, **caractérisé en ce que** le dit réseau local sans fil est structuré en une pluralité de domaines logiques à l'intérieur desquels le trafic peut être confiné et qui existent indépendamment d'une position physique des terminaux mobiles.

4. Réseau local sans fil selon la revendication 3, **caractérisé en ce que** le dit réseau local sans fil comprend des domaines logiques en chevauchement.

5. Réseau local sans fil selon une quelconque des revendications 1 à 4, **caractérisé en ce qu'**une connexion de canal virtuel (VCC) de données directe individuelle est établie entre chaque paire de terminaux mobiles (MT) en communication.

6. Réseau local sans fil selon une quelconque des revendications 1 à 5, **caractérisé en ce qu'**un canal virtuel de signalisation (VC) est employé pour assurer des connexions de canal de commande.

7. Réseau local sans fil selon une quelconque des revendications 1 à 6, **caractérisé en ce qu'**un canal virtuel (VC) de transfert est employé pour la transmission de messages relatifs à la mobilité des terminaux.

8. Réseau local sans fil selon une quelconque des revendications 1 à 7, **caractérisé en ce que** le dit schéma de transfert emploie les messages suivants :
- un message de position ;
- un message de connexion ;
- un message d'acheminement ; et
- un message complet.

9. Réseau local sans fil selon une quelconque des revendications 1 à 8, **caractérisé en ce qu'**un MT est agencé pour déclencher une interrogation de connexion afin d'obtenir un VCC associé au MT à partir du BS_{original}, et de transmettre le résultat de l'interrogation de connexion à BSₙₒᵤᵥₑₐᵤ dans un message de connexion.

10. Réseau local sans fil selon une quelconque des revendications 1 à 9, **caractérisé en ce qu'**un message d'acheminement comprend des VCC associés au MT, une station de base d'origine et une nouvelle station de base, et permet à un commutateur ATM d'identifier si un transfert est inter-commutateur ou intra-commutateur.

11. Réseau local sans fil selon une quelconque des revendications 1 à 10, **caractérisé en ce qu'**un commutateur ATM est agencé pour transmettre, chaque fois que le commutateur ATM a terminé une modification de SRD, un message complet, contenant tous les VCC associés au MT, à une nouvelle station de base (BSₙₒᵤᵥₑₐᵤ).

12. Réseau local sans fil selon une quelconque des revendications précédentes, **caractérisé en ce que** chaque MT, à l'intérieur d'une zone desservie par un commutateur ATM, possède une valeur d'indicateur de canal virtuel (VCI) unique.

13. Réseau local sans fil selon une quelconque des revendications précédentes, **caractérisé en ce que** des premiers moyens sont prévus pour déterminer, après achèvement d'un transfert inter-commutateur, si la communication est ou non établie sur un chemin optimal, et **en ce que** des deuxièmes moyens sont prévus pour la migration de la dite communication à un chemin optimal, si le dit. chemin n'est pas optimal.

14. Réseau local sans fil selon la revendication 13, **caractérisé en ce qu'**un message de partenaire est employé pour transmettre une adresse ATM d'un BS partenaire à un BS d'origine (BS_{original}).

15. Réseau local sans fil selon la revendication 13 ou 14, **caractérisé en ce que**, pendant la migration de chemin, le protocole de message de justification du protocole d'émulation de LAN est employé pour maintenir l'ordre des blocs.

16. Procédé d'obtention d'un transfert intra-commutateur sans discontinuité dans un réseau local sans fil ayant une pluralité de terminaux mobiles (MT) et une pluralité de stations de base sans fil (BS) reliées par un réseau d'infrastructure, le dit réseau d'infrastructure étant un réseau commuté à mode de transfert asynchrone (ATM) ayant une pluralité de noeuds de commutation ATM (X, Y, Z), chaque noeud de commutation (X, Y, Z) maintenant une base de données d'acheminement de commutateur (SRD), et la mobilité à la fois intra-commutateur et inter-commutateur étant assurée par le dit réseau d'infrastructure, pour un noeud de commutation ATM, d'un MT d'un premier BS (BS₀) à un deuxième BS (BS₁), **caractérisé en ce que** chaque station de base (BS) maintient une base de données de mappage (MVD) de paire de terminaux mobiles - connexion de canal virtuel (VCC), et par les étapes suivantes :
le dit MT émet une interrogation de position pour obtenir l'adresse ATM du dit deuxième BS (BS₁) et transmet son résultat au premier BS (BS₀) dans un message de position, et il émet une interrogation de connexion et transmet son résultat au dit deuxième BS (BS₁) dans un message de connexion ;
le premier BS (BS₀) transmet un message d'acheminement au noeud de commutation ATM (X) ;
le dit noeud de commutation ATM (X) modifie les couples correspondant aux dits VCC associés au MT dans un SRD situé au dit noeud de commutation ATM (X) ;
le dit noeud de commutation ATM (X) envoie un message complet identifiant toutes les nouvelles paires d'indicateur de chemin virtuel / indicateur de canal virtuel (VPI / VCI) à la dite deuxième station de base (BS₁) ;
la dite deuxième station de base (BS₁) ajoute les nouveaux VCC associés au MT à son MVD ; et
la deuxième station de base (BS₁) redémarre la transmission de données.

17. Procédé d'obtention d'un transfert inter-commutateur sans discontinuité dans un réseau local sans fil ayant une pluralité de terminaux mobiles (MT) et une pluralité de stations de base sans fil (BS) reliées par un réseau d'infrastructure, le dit réseau d'infrastructure étant un réseau commuté à mode de transfert asynchrone (ATM) ayant une pluralité de noeuds de commutation ATM (X, Y, Z), chaque noeud de commutation (X, Y, Z) maintenant une base de données d'acheminement de commutateur (SRD), et la mobilité à la fois intra-commutateur et inter-commutateur étant assurée par le dit réseau d'infrastructure, d'un MT à partir d'un premier BS (BS₁), connecté à un premier noeud de commutation ATM (X), vers un deuxième BS (BS₂), connecté à un deuxième noeud de commutation ATM (Y), **caractérisé en ce que** chaque station de base (BS) maintient une base de données de mappage (MVD) de paire de terminaux mobiles - connexion de canal virtuel (VCC), et par les étapes suivantes :
le dit MT émet une interrogation de position pour obtenir l'adresse ATM du deuxième BS (BS₂) et transmet son résultat au dit premier BS (BS₁) dans un message de position, et il émet une interrogation de connexion et transmet son résultat au dit deuxième BS (BS₂) dans un message de connexion ;
le premier BS (BS₁) transmet un message d'acheminement au premier noeud de commutation ATM (X) ;
le premier noeud de commutation ATM (X) établit une connexion virtuelle commutée (SVC) à la deuxième station de base (BS₂) pour chacun des VCC associés au MT ;
le dit premier noeud de commutation ATM (X) modifie les couples correspondant aux dits VCC associés au MT dans un SRD situé au dit premier noeud de commutation ATM (X) ;
le dit premier noeud de commutation ATM (X) transmet un message de couplage à la deuxième station de base (BS₂) ;
la deuxième station de base (BS₂) ajoute le nouveau VCC associé au MT dans son MVD ; et
la deuxième station de base (BS₂) redémarre la transmission de données.

18. Procédé selon la revendication 17, **caractérisé en ce que**, si le dit premier noeud de commutation ATM (X) détecte qu'un port de sortie et un port d'entrée d'une connexion mobile sont identiques, de sorte qu'il existe un chemin de boucle à plus longue boucle, les étapes suivantes sont effectuées :
le dit premier noeud de commutation ATM (X) libère le SVC établi pour le plus long chemin de boucle ;
le dit premier noeud de commutation ATM (X) envoie un message d'acheminement à un troisième noeud de commutation ATM adjacent (Z) ;
le troisième noeud de commutation ATM (Z) établit un nouveau SVC à la deuxième station de base (BS₂) ;
le troisième noeud de commutation ATM (Z) recherche un chemin de boucle et, si aucun chemin de boucle n'est détecté, il termine la procédure de transfert ;
si le dit troisième commutateur ATM (Z) détecte un chemin de boucle, la procédure ci-dessus est répétée avec un quatrième noeud de commutation ATM adjacent.

19. Procédé selon une quelconque des revendications 16 à 18, **caractérisé en ce que**, à la fin d'une procédure de transfert pour un premier MT, en communication active avec un deuxième MT, entre une première station de base et une deuxième station de base, la dite deuxième station de base établit un nouveau VCC vers une station de base distante, par l'intermédiaire de laquelle le deuxième MT est connecté, par exécution d'une procédure d'acheminement et, si le dit VCC diffère du VCC établi lors du transfert, elle effectue une migration de la communication au nouveau VCC.

20. Procédé selon la revendication 19, **caractérisé en ce que** la dite procédure d'acheminement est une procédure de plus court chemin.

21. Procédé selon la revendication 19 ou 20, **caractérisé en ce que** l'ordre des blocs est conservé par utilisation du protocole de message de justification du protocole d'émulation de LAN.
